# EUROPEAN PATENT SPECIFICATION

(11) **EP 2 937 793 B1**
(45) Date of publication and mention of the grant of the patent: **14.03.2018**
(21) Application number: 13864996.7
(22) Date of filing: 12.12.2013
(51) Int. Cl.: G06F 17/30, G06F 12/08, H04L 12/70

(54) **RAM, NETWORK PROCESSING SYSTEM AND TABLE LOOK-UP METHOD FOR RAM**
RAM, NETZWERKVERARBEITUNGSSYSTEM UND NACHSCHLAGETABELLENVERFAHREN FÜR RAM
MÉMOIRE VIVE, SYSTÈME DE TRAITEMENT DE RÉSEAU ET PROCÉDÉ DE CONSULTATION DE TABLE DESTINÉ À UNE MÉMOIRE VIVE

(30) Priority: 18.12.2012 CN 201210549857
(43) Date of publication of application: 28.10.2015
(73) Proprietor: ZTE Corporation, Shenzhen, Guangdong 518057 (CN)
(72) Inventor: JIANG, Haiming, Shenzhen Guangdong 518057 (CN)
(74) Representative: Novagraaf Technologies
(86) International application number: PCT/CN2013/089238
(87) International publication number: WO 2014/094569

(56) References cited:
- CN-A- 1 655 534
- CN-A- 102 402 611
- CN-A- 103 064 901
- US-A1- 2008 155 206
- US-A1- 2009 216 994
- US-B1- 8 284 664

## Description

### Technical Field

The present invention relates to the technical field of communications, and in particular to a Random Access Memory (RAM), a network processing system and a table lookup method for the RAM.

### Background

At present, with the astonishingly rapid development of the network, the increase of network traffic and the emergence of a new service, network equipment are required to have a high speed capability and a flexible processing capability. A network processor, with a high-speed processing capability and a flexible programmability, has become an effective solution for data processing in the existing network.

However, the forwarding speed of the network processor is increasing at an amazing speed now, and the forwarding speed of the existing mainstream network processor has reached 100bps (in packet speed of 150Mpps). Obviously, the increase speed of an RAM interface bandwidth cannot keep up with the increase of the forwarding speed of the network processor, therefore, how to improve the lookup speed for the RAM is a problem to be solved.
US 2008/155206 and US 8284664 provide respective technical solutions; however, the above mentioned problem still remains unsolved.

### Summary

An embodiment of the present invention provides an RAM, a network processing system and a table lookup method for the RAM, so as to solve the problem of low table lookup efficiency of the RAM.

The technical solution adopted by the embodiment of the present invention is as follows:
A table lookup method for the RAM includes:
   a network processor receives a service table access message from each physical interface respectively;
   the network processor parses the service table access message to acquire identifying information of a service table to be accessed by the service table access message;
   a virtual memory library address is allocated to the service table access message according to the identifying information of the service table, wherein the RAM is divided into a plurality of virtual memory libraries, at least two virtual memory libraries of the plurality of virtual memory libraries store the service table to be accessed, the virtual memory library address is an address of a virtual memory library which is one of the at least two virtual memory libraries; and
   a corresponding virtual memory library is searched according to the virtual memory library address for the corresponding service table;
   wherein allocating the virtual memory library address includes:
      the network processor searches a virtual memory library which stores the service table to be accessed according to the identifying information of the service table carried in the service table access message, and selects the virtual memory library which has the lowest traffic to generate the virtual memory library address.

Preferably, allocating the virtual memory library address may include: the network processor determines the virtual memory library address corresponding to the service table access message through hash computation according to the identifying information of the service table carried in the service table access message.

Preferably, after the virtual memory library address corresponding to the service table access message is acquired, the method may further include: a table lookup key value is constructed according to the acquired virtual memory library address, and the corresponding service table is searched for in a corresponding virtual memory library according to the table lookup key value.

Preferably, the RAM includes one of a Static Random Access Memory (SRAM), a Ternary Content Addressable Memory (TCAM) and a Synchronous Dynamic Random Access Memory SDRAM.

An embodiment of the present invention further provides a network processing system, including a network processor and an RAM.

The network processor includes a receiving component, a parsing component, an allocation component, a lookup component and a processing component, wherein
the receiving component is configured to receive a service table access message from each physical interface respectively;
the parsing component is configured to parse the service table access message received by the receiving component to acquire the identifying information of a service table to be accessed by the service table access message;
the allocation component is configured to allocate a virtual memory library address for the service table access message according to the identifying information of the service table, wherein the virtual memory library corresponding to the virtual memory library address contains the service table to be accessed;
the lookup component is configured to look up the service table in a corresponding virtual memory library in the RAM according to the acquired virtual memory library address and forward a returned lookup result to the processing component; and
the processing component is configured to carry out the corresponding service processing according to the returned lookup result.

The RAM includes at least two virtual memory libraries, and a same service table is stored in at least two of the at least two virtual memory libraries of the RAM.

The allocation component further includes:
a selecting element which is configured to look up at least one virtual memory library which contains the service table to be accessed according to the identifying information of the service table carried in the service table access message and select the virtual memory library which has the lowest traffic to generate the corresponding memory address.

Preferably, the allocation component may further include a hash computing element which is configured to determine the virtual memory library address corresponding to the service table access message through hash computation according to the identifying information of the service table carried in the service table access message when a same service table is stored in all the virtual memory libraries in the RAM.

Preferably, the RAM is characterized by further including a constructing component which is configured to construct a table lookup key value according to the acquired virtual memory library address after the allocation component acquires the virtual memory library address corresponding to the service table access message; and the RAM looks up the corresponding service table in the corresponding virtual memory library according to the key value.

Preferably, the RAM includes one of an SRAM, a TCAM and an SDRAM.

The embodiments of the present invention have the following beneficial effects: an RAM, a network processing system and a table lookup method for the RAM are provided; the RAM is divided into at least two virtual memory libraries, a same service table is stored in the at least two virtual memory libraries, and a proper virtual memory library is determined through the computation of a network memory to be accessed, so that the table lookup speed of the RAM is improved, the access traffic pressure is effectively reduced for the RAM, and the network forwarding performance is improved.

Moreover, a same service table can be stored in the virtual memory libraries of the RAM, the table lookup speed of the RAM is increased maximally, and the network processor can compute the virtual memory library address information through hash computation, so that the computation process is more simple and convenient, a proper virtual memory library can be found more effectively, and the table lookup efficiency and the network forwarding performance are further improved.

### Brief Description of the Drawings

Fig. 1 is a diagram showing a structure of an SDRAM in an embodiment of the present invention;
Fig. 2 is a diagram showing a structure of a network processor in an embodiment of the present invention;
Fig. 3 is a diagram showing a structure of a network processor in another embodiment of the present invention; and
Fig. 4 is a flowchart of a table lookup method for an RAM in an embodiment of the present invention.

### Detailed Description of the Embodiments

In the embodiments of the present invention, an RAM is divided into a plurality of virtual memory libraries, a same service table is stored in at least two of the plurality of virtual memory libraries. When a service table access message indicates to access a corresponding service table, a service processor carries out a corresponding computation according to the identifying information of the service table carried in the service table access message, so that a proper virtual memory library address is acquired for accessing the RAM by a network processor. The RAM in the embodiments of the present invention may be various memory libraries, such as a Static Random Access Memory (SRAM), a Ternary Content Addressable Memory (TCAM) and a Synchronous Dynamic Random Access Memory (SDRAM), and the table lookup efficiency of all the memory libraries may be improved by the table lookup method in the present invention. To describe the technical solution and advantages of the present invention more clearly, the present invention is described below in combination with the accompanying drawings and specific embodiments in detail.

In the embodiment of the present invention, the RAM may be various memory libraries, but the SDRAM, limited by own structure, has a relatively low table lookup speed; and the table lookup method provided by the embodiment of the present invention may achieve a better effect when it is applied to the SDRAM. Therefore, the technical solution of the application is described with the SDRAM as an example in the embodiment.

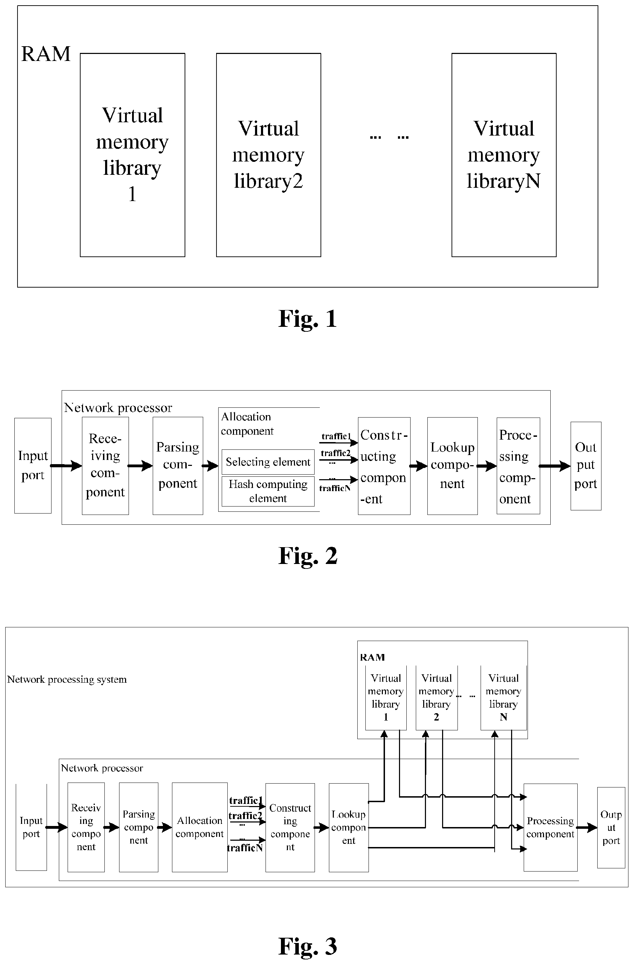

Please refer to Fig. 1, in one embodiment, the SDRAM may be divided into at least two virtual memory libraries. For the table lookup speed of the whole SDRAM, preferably, the capacity of respective virtual memory libraries may be divided uniformly. In the embodiment, the SDRAM is divided into N virtual memory libraries. In order to improve the table lookup speed, a service table may be stored in two of the at least two virtual memory libraries respectively. Preferably, the same service table is stored in all the divided virtual memory libraries to improve the table lookup efficiency maximally. The number of the virtual memory libraries divided by the RAM may be greater than 1, preferably, the number N of the virtual memory libraries divided by the RAM may be F2/F1, where F1 is a frequency for searching the service table in each of the at least two virtual memory libraries, and F2 is a frequency, actually required by a service table, for searching the service table.

Please refer to Figs. 2 and 3, one embodiment further provides a network processing system, which includes a network processor and an RAM. The network processor includes a receiving component, a parsing component, an allocation component, a lookup component and a processing component, wherein the receiving component is mainly configured to receive a service table access message from each physical interface; the parsing component is configured to parse the service table access message received by the receiving component and acquire identifying information of the service table accessed by the service table access message; the allocation component is configured to allocate a virtual memory library address for the service table access message according to the identifying information of the service table; the lookup component is configured to look up a service table in a corresponding virtual memory library in the RAM according to the acquired virtual memory library address and forward a returned lookup result to the processing component; and the processing component is configured to carry out a corresponding service processing according to the returned lookup result.

In one embodiment, the allocation component may further include: a selecting element which is mainly configured to query virtual memory libraries which contain the service table to be accessed according to the identifying information of the service table carried in the service table access message and select a virtual memory library which has the lowest traffic to generate the corresponding memory library address.

In one embodiment, another network processor is further provided, which includes a receiving component, a parsing component, an allocation component, a lookup component and a processing component; the functions of respective components are the same as those in the embodiment above, and the difference lies in that the allocation component here further includes: a hash computing element which is configured to determine the virtual memory library address corresponding to the service table access message through hash computation according to the identifying information of the service table carried in the service table access message when the same service table is stored in all the virtual memory libraries in the SDRAM.

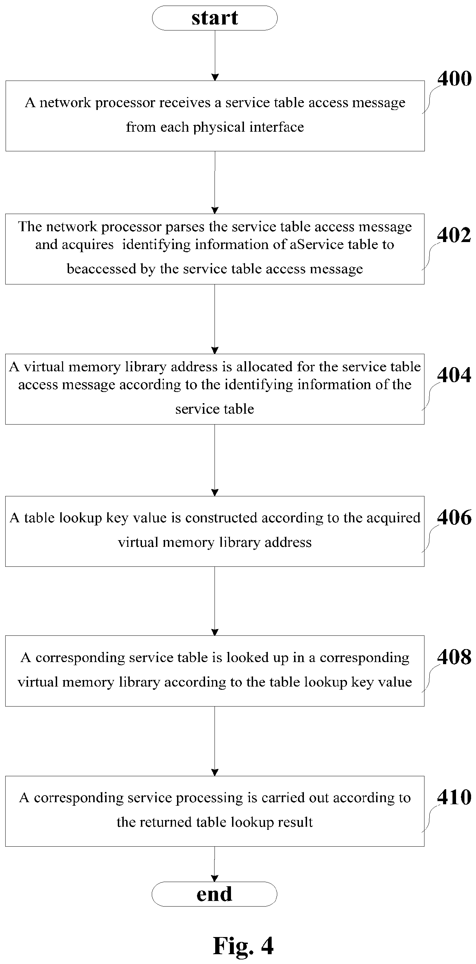

Please refer to Fig. 4, a table lookup method for an RAM in the application is described below in combination with the structure of the RAM and the function of respective components of the network processor in detail.

The table lookup method for the RAM in the embodiment includes the following steps S400-S410.

In step 400: A network processor receives a service table access message from each physical interface, and then Step 402 is executed.

In the step, the receiving component of the network processor is mainly responsible for receiving the service table access message from each physical interface.

In step 402: The network processor parses the service table access message and acquires identifying information of the service table carried in the service table access message, and then Step 404 is executed.

In the step, the parsing component is responsible for parsing the received service table access message and acquiring the identifying information of the service table carried in the service table access message, wherein the acquired identifying information of the service table is mainly MAC address information or IP address information and the like of the service table access message.

In step 404: A virtual memory library address is allocated for the service table access message according to the identifying information of the service table, and then Step 406 is executed.

In the step, when a same service table is not stored in all the virtual memory libraries in the RAM, a selecting element in an allocation component is responsible for querying a plurality virtual memory libraries containing a service table to be accessed according to the identifying information of the service table of the service table access message and selecting a virtual memory library having the lowest traffic to generate memory library address information. When a same service table is contained in all the virtual memory libraries in the RAM, a hash computing element in the allocation component determines a virtual memory library address corresponding to the service table access message through hash computation according to the identifying information of the service table of the service table access message.

In step 406: A table lookup key value is constructed according to the acquired virtual memory library address, and then Step 408 is executed.

In the step, the constructing component is responsible for constructing a corresponding table lookup key value according to the virtual memory library address acquired through the computation of the allocation component, namely, compiling the virtual memory library address into a corresponding table lookup key value.

In step 408: A corresponding service is looked up in a corresponding virtual memory library according to the table lookup key value, and then Step 410 is executed.

In the step, the lookup component is responsible for looking up a service table in a corresponding virtual memory library in the RAM according to a corresponding table lookup key value, and forwarding a returned table lookup result to the processing component.

Step 410: A corresponding service processing is carried out according to the returned table lookup result.

In the step, the processing component carries out a corresponding service processing according to the returned table lookup result.

The above are further descriptions of the present invention in combination with the specific embodiments, and it can be understood that the specific embodiments of the present invention are not only limited to these description. Various simple derivations or replacements can be made by those skilled in the art within the concept of the present invention and pertain to the scope of protection of the present invention.

## Claims

1. A table lookup method for a Random Access Memory, RAM, **characterized by** comprising:
receiving, by a network processor, a service table access message from each physical interface (400);
the network processor parsing the service table access message to acquire identifying information of a service table to be accessed by the service table access message (402);
allocating a virtual memory library address for the service table access message according to the identifying information of the service table, wherein the RAM is divided into a plurality of virtual memory libraries, at least two virtual memory libraries of the plurality of virtual memory libraries store the service table to be accessed, the virtual memory library address is an address of a virtual memory library which is one of the at least two virtual memory libraries; and
accessing the virtual memory library corresponding to the virtual memory library address allocated to look up the corresponding service table (410);
wherein allocating the virtual memory library address (404) comprises: the network processor looking up at least one virtual memory library which stores the service table to be accessed according to the identifying information of the service table carried in the service table access message, and selecting a virtual memory library which has the lowest traffic currently to generate the virtual memory library address.

2. The table lookup method for the RAM according to claim 1, **characterized in that** allocating the virtual memory library address (404) comprises: determining, by the network processor, the virtual memory library address corresponding to the service table access message through hash computation according to the identifying information of the service table carried in the service table access message.

3. The table lookup method for the RAM according to claim 1 or 2, **characterized in that** after the virtual memory library address corresponding to the service table access message is acquired (404), the method further comprise: constructing a table lookup key value according to the acquired virtual memory library address (406), and looking up a corresponding service table in the corresponding virtual memory library according to the table lookup key value (408).

4. The table lookup method for the RAM according to claim 1 or 2, **characterized in that** the RAM comprises one of a Static Random Access Memory, SRAM, a Ternary Content Addressable Memory, TCAM, and a Synchronous Dynamic Random Access Memory, SDRAM.

5. A network processing system, **characterized by** comprising a network processor and a Random Access Memory, RAM, wherein
the network processor comprises a receiving component, a parsing component, an allocation component, a lookup component and a processing component;
the receiving component is configured to receive a service table access message from each physical interface;
the parsing component is configured to parse the service table access message received by the receiving component to acquire identifying information of a service table to be accessed by the service table access message;
the allocation component is configured to allocate a virtual memory library address for the service table access message according to the identifying information of the service table, the virtual memory library corresponding to the virtual memory library address containing the service table to be looked up;
the lookup component is configured to look up the service table in a corresponding virtual memory library in the RAM according to the acquired virtual memory library address and forward a returned lookup result to the processing component;
the processing component is configured to carry out the corresponding service processing according to the returned lookup result; and
the RAM comprises at least two virtual memory libraries, and a same service table is stored in at least two of the at least two virtual memory libraries of the RAM;
the allocation component further comprises: a selecting element, the selecting element is configured to search at least one virtual memory library which stores the service table to be accessed according to the identifying information of the service table carried in the service table access message and select the virtual memory library which has the lowest traffic currently to generate the corresponding virtual memory library address.

6. The network processing system according to claim 5, **characterized in that** the allocation component may further comprise a hash computing element configured to determine the virtual memory library address corresponding to the service table access message through hash computation according to the identifying information of the service table carried in the service table access message when a same service table is stored in all the virtual memory libraries in the RAM.

7. The network processing system according to claim 5 or 6, **characterized in that** the system further comprises a constructing component configured to construct a table lookup key value according to the acquired virtual memory library address after the allocation component acquires the virtual memory library address corresponding to the service table access message; and the RAM looks up the corresponding service table in the corresponding virtual memory library according to the table lookup key value.

8. The network processing system according to claim 5 or 6, **characterized in that** the RAM comprises one of a Static Random Access Memory, SRAM, a Ternary Content Addressable Memory, TCAM, and a Synchronous Dynamic Random Access Memory, SDRAM.

## Patentansprüche

1. Tabellennachschlageverfahren für einen Random Access Memory, RAM, **dadurch gekennzeichnet, dass** es umfasst:
Empfangen, durch einen Netzwerkprozessor, einer Diensttabellen-Zugriffsnachricht von jeder physikalischen Schnittstelle (400);
Parsen, durch den Netzwerkprozessor, der Diensttabellen-Zugriffsnachricht, um Identifizierungsinformationen einer Diensttabelle, auf die zugegriffen werden soll, aus der Diensttabellen-Zugriffsnachricht zu ermitteln (402);
Zuweisen einer virtuellen Speicherbibliotheksadresse für die Diensttabellen-Zugriffsnachricht gemäß den Identifizierungsinformationen der Diensttabelle, wobei der RAM in eine Vielzahl von virtuellen Speicherbibliotheken unterteilt ist, mindestens zwei virtuelle Speicherbibliotheken aus der Vielzahl von virtuellen Speicherbibliotheken die Diensttabelle, auf die zugegriffen werden soll, speichern, die virtuelle Speicherbibliotheksadresse eine Adresse einer virtuellen Speicherbibliothek ist, die eine aus den mindestens zwei virtuellen Speicherbibliotheken ist; und
Zugreifen auf die der zugewiesenen virtuellen Speicherbibliotheksadresse entsprechende virtuelle Speicherbibliothek, um die entsprechende Diensttabelle (410) nachzuschlagen;
wobei das Zuweisen der virtuellen Speicherbibliotheksadresse (404) umfasst: Nachschlagen, durch den Netzwerkprozessor, von mindestens einer virtuellen Speicherbibliothek, die die Diensttabelle, auf die gemäß den in der Diensttabellen-Zugriffsnachricht getragenen Identifizierungsinformationen der Diensttabelle zugegriffen werden soll, speichert, und Auswählen einer virtuellen Speicherbibliothek, die den aktuell niedrigsten Traffic hat, um die virtuelle Speicherbibliotheksadresse zu erzeugen.

2. Tabellennachschlageverfahren für den RAM gemäß Anspruch 1, **dadurch gekennzeichnet, dass** das Zuweisen der virtuellen Speicherbibliotheksadresse (404) umfasst: Bestimmen, durch den Netzwerkprozessor, der der Diensttabellen-Zugriffsnachricht entsprechenden virtuellen Speicherbibliotheksadresse über Hash-Berechnung gemäß den in der Diensttabellen-Zugriffsnachricht getragenen Identifizierungsinformationen der Diensttabelle.

3. Tabellennachschlageverfahren für den RAM gemäß Anspruch 1 oder 2, **dadurch gekennzeichnet, dass** nachdem die der Diensttabellen-Zugriffsnachricht entsprechende virtuelle Speicherbibliotheksadresse ermittelt wurde (404), das Verfahren weiter umfasst: Konstruieren eines Tabellennachschlage-Schlüsselwerts gemäß der virtuellen Speicherbibliotheksadresse, die ermittelt wurde (406), und Nachschlagen einer entsprechenden Diensttabelle in der entsprechenden virtuellen Speicherbibliothek gemäß dem Tabellennachschlage-Schlüsselwert (408).

4. Tabellennachschlageverfahren für den RAM gemäß Anspruch 1 oder 2, **dadurch gekennzeichnet, dass** der RAM eines aus einem Static Random Access Memory, SRAM, einem Ternary Content Addressable Memory, TCAM, und einem Synchronous Dynamic Random Access Memory, SDRAM, umfasst.

5. Netzwerkverarbeitungssystem, **dadurch gekennzeichnet, dass** es einen Netzwerkprozessor und einen Random Access Memory, RAM, umfasst, wobei
der Netzwerkprozessor eine Empfangskomponente, eine Parsing-Komponente, eine Zuweisungskomponente, eine Nachschlagekomponente und eine Verarbeitungskomponente umfasst;
die Empfangskomponente dazu konfiguriert ist, eine Diensttabellen-Zugriffsnachricht von jeder physikalischen Schnittstelle zu empfangen;
die Parsing-Komponente dazu konfiguriert ist, die durch die Empfangskomponente empfangene Diensttabellen-Zugriffsnachricht zu parsen, um Identifizierungsinformationen einer Diensttabelle, auf die zugegriffen werden soll, aus der Diensttabellen-Zugriffsnachricht zu ermitteln;
die Zuweisungskomponente dazu konfiguriert ist, eine virtuelle Speicherbibliotheksadresse für die Diensttabellen-Zugriffsnachricht gemäß den Identifizierungsinformationen der Diensttabelle zuzuweisen, wobei die virtuelle Speicherbibliothek, die der virtuellen Speicherbibliotheksadresse entspricht, die Diensttabelle enthält, die nachgeschlagen werden soll;
die Nachschlagekomponente dazu konfiguriert ist, die Diensttabelle in einer entsprechenden virtuellen Speicherbibliothek im RAM gemäß der virtuellen Speicherbibliotheksadresse, die ermittelt wurde, nachzuschlagen, und ein zurückgegebenes Nachschlageergebnis an die Verarbeitungskomponente weiterzuleiten;
die Verarbeitungskomponente dazu konfiguriert ist, die entsprechende Dienstverarbeitung gemäß dem zurückgegebenen Nachschlageergebnis auszuführen; und
der RAM mindestens zwei virtuelle Speicherbibliotheken umfasst, und ein und dieselbe Diensttabelle in mindestens zwei der mindestens zwei virtuellen Speicherbibliotheken des RAM gespeichert ist;
die Zuweisungskomponente weiter umfasst: ein Auswahlelement, wobei das Auswahlelement dazu konfiguriert ist, mindestens eine virtuelle Speicherbibliothek zu suchen, die die Diensttabelle, auf die gemäß den in der Diensttabellen-Zugriffsnachricht getragenen Identifizierungsinformationen der Diensttabelle zugegriffen werden soll, speichert, und die virtuelle Speicherbibliothek auszuwählen, die den aktuell niedrigsten Traffic hat, um die entsprechende virtuelle Speicherbibliotheksadresse zu erzeugen.

6. Netzwerkverarbeitungssystem gemäß Anspruch 5, **dadurch gekennzeichnet, dass** die Zuweisungskomponente weiter ein Hash-Berechnungselement umfassen kann, das dazu konfiguriert ist, die der Diensttabellen-Zugriffsnachricht entsprechende virtuelle Speicherbibliotheksadresse über Hash-Berechnung gemäß den in der Diensttabellen-Zugriffsnachricht getragenen Identifizierungsinformationen der Diensttabelle zu bestimmen, wenn ein und dieselbe Diensttabelle in allen den virtuellen Speicherbibliotheken im RAM gespeichert ist.

7. Netzwerkverarbeitungssystem gemäß Anspruch 5 oder 6, **dadurch gekennzeichnet, dass** das System weiter eine Konstruktionskomponente umfasst, die dazu konfiguriert ist, einen Tabellennachschlage-Schlüsselwert gemäß der virtuellen Speicherbibliotheksadresse, die ermittelt wurde, zu konstruieren, nachdem die Zuweisungskomponente die der Diensttabellen-Zugriffsmeldung entsprechende virtuelle Speicherbibliotheksadresse ermittelt; und der RAM die entsprechende Diensttabelle in der entsprechenden virtuellen Speicherbibliothek gemäß dem Tabellennachschlage-Schlüsselwert nachschlägt.

8. Netzwerkverarbeitungssystem gemäß Anspruch 5 oder 6, **dadurch gekennzeichnet, dass** der RAM eines aus einem Static Random Access Memory, SRAM, einem Ternary Content Addressable Memory, TCAM, und einem Synchronous Dynamic Random Access Memory, SDRAM, umfasst.

## Revendications

1. Procédé de consultation de table pour une mémoire vive, RAM, **caractérisé en ce qu'**il comprend :
la réception, par un processeur de réseau, d'un message d'accès de table de service à partir de chaque interface physique (400) ;
l'analyse syntaxique par le processeur de réseau du message d'accès de table de service pour acquérir des informations d'identification d'une table de service destinée à être consultée par le message d'accès de table de service (402) ;
l'allocation d'une adresse de bibliothèque de mémoire virtuelle pour le message d'accès de table de service en fonction des informations d'identification de la table de service, dans lequel la RAM est divisée en une pluralité de bibliothèques de mémoire virtuelle, au moins deux bibliothèques de mémoire virtuelle de la pluralité de bibliothèques de mémoire virtuelle stockent la table de service à consulter, l'adresse de bibliothèque de mémoire virtuelle est une adresse d'une bibliothèque de mémoire virtuelle qui est une des au moins deux bibliothèques de mémoire virtuelle ; et
l'accès à la bibliothèque de mémoire virtuelle correspondant à l'adresse d'une bibliothèque de mémoire virtuelle allouée pour consulter la table de service correspondante (410) ;
dans lequel l'allocation de l'adresse de bibliothèque de mémoire virtuelle (404) comprend : la consultation par le processeur de réseau d'au moins une bibliothèque de mémoire virtuelle qui stocke la table de service à consulter en fonction des informations d'identification de la table de service transportées dans le message d'accès de table de service, et la sélection d'une bibliothèque de mémoire virtuelle qui a actuellement le plus faible trafic pour générer l'adresse de bibliothèque de mémoire virtuelle.

2. Procédé de consultation de table pour la RAM selon la revendication 1, **caractérisé en ce que** l'allocation de l'adresse de bibliothèque de mémoire virtuelle (404) comprend : la détermination, par le processeur de réseau, de l'adresse de bibliothèque de mémoire virtuelle correspondant au message d'accès de table de service au moyen d'un calcul de hachage en fonction des informations d'identification de la table de service transportée dans le message d'accès de table de service.

3. Procédé de consultation de table pour la RAM selon la revendication 1 ou 2, **caractérisé en ce que**, après que l'adresse de bibliothèque de mémoire virtuelle correspondant au message d'accès de table de service est acquise (404), le procédé comprend en outre : la construction d'une valeur de clé de consultation de table en fonction de l'adresse de bibliothèque de mémoire virtuelle acquise (406), et la consultation d'une table de service correspondante dans la bibliothèque de mémoire virtuelle correspondante en fonction de la valeur de clé de consultation de table (408).

4. Procédé de consultation de table pour la RAM selon la revendication 1 ou 2, **caractérisé en ce que** la RAM comprend une parmi une mémoire vive statique, SRAM, une mémoire adressable par contenu ternaire, TCAM et une mémoire vive dynamique synchrone, SDRAM.

5. Système de traitement de réseau **caractérisé en ce qu'**il comprend un processeur de réseau et une mémoire vive, RAM, dans lequel
le processeur de réseau comprend un composant de réception, un composant d'analyse syntaxique, un composant d'allocation, un composant de consultation et un composant de traitement ;
le composant de réception est configuré pour recevoir un message d'accès de table de service à partir de chaque interface physique ;
le composant d'analyse syntaxique est configuré pour analyser syntaxiquement le message d'accès de table de service reçu par le composant de réception pour acquérir des informations d'identification d'une table de service destinée à être consultée par le message d'accès de table de service ;
le composant d'allocation est configuré pour allouer une adresse de bibliothèque de mémoire virtuelle pour le message d'accès de table de service en fonction des informations d'identification de la table de service, la bibliothèque de mémoire virtuelle correspondant à l'adresse de bibliothèque de mémoire virtuelle contenant la table de service à consulter ;
le composant de consultation est configuré pour consulter la table de service dans une bibliothèque de mémoire virtuelle correspondante dans la RAM en fonction de l'adresse d'une bibliothèque de mémoire virtuelle acquise et transmettre un résultat de consultation renvoyé au composant de traitement ;
le composant de traitement est configuré pour exécuter le traitement de service correspondant en fonction du résultat de consultation renvoyé ; et
la RAM comprend au moins deux bibliothèques de mémoire virtuelle et une même table de service est stockée dans au moins deux des au moins deux bibliothèques de mémoire virtuelle de la RAM ;
le composant d'allocation comprend en outre : un élément de sélection, l'élément de sélection est configuré pour rechercher au moins une bibliothèque de mémoire virtuelle qui stocke la table de service à consulter en fonction des informations d'identification de la table de service transportée dans le message d'accès de table de service et sélectionner la bibliothèque de mémoire virtuelle qui a actuellement le plus faible trafic pour générer l'adresse de bibliothèque de mémoire virtuelle correspondante.

6. Système de traitement de réseau selon la revendication 5, **caractérisé en ce que** le composant d'allocation peut comprendre en outre un élément de calcul de hachage configuré pour déterminer l'adresse de bibliothèque de mémoire virtuelle correspondant au message d'accès de table de service au moyen d'un calcul de hachage en fonction des informations d'identification de la table de service transportée dans le message d'accès de table de service quand une même table de service est stockée dans toutes les bibliothèques de mémoire virtuelle de la RAM.

7. Système de traitement de réseau selon la revendication 5 ou 6, **caractérisé en ce que** le système comprend en outre un composant de construction configuré pour construire une valeur de clé de consultation de table en fonction de l'adresse de bibliothèque de mémoire virtuelle acquise après que le composant d'allocation acquiert l'adresse de bibliothèque de mémoire virtuelle correspondant au message d'accès de table de service ; et la RAM consulte la table de service correspondante dans la bibliothèque de mémoire virtuelle correspondante en fonction de la valeur de clé de consultation de table.

8. Système de traitement de réseau selon la revendication 5 ou 6, **caractérisé en ce que** la RAM comprend une parmi une mémoire vive statique, SRAM, une mémoire adressable par contenu ternaire, TCAM et une mémoire vive dynamique synchrone, SDRAM.
